# EUROPÄISCHE PATENTSCHRIFT

(11) **EP 4 125 531 B1**
(45) Veröffentlichungstag und Bekanntmachung des Hinweises auf die Patenterteilung: **23.09.2026**
(21) Anmeldenummer: 21712109.4
(22) Anmeldetag: 11.03.2021
(51) Int. Cl.: A47L 15/42, D06F 39/12

(54) **HAUSHALTSGERÄT**
DOMESTIC APPLIANCE
APPAREIL MÉNAGER

(30) Priorität: 30.03.2020 DE 102020204085
(43) Veröffentlichungstag der Anmeldung: 08.02.2023
(73) Patentinhaber: BSH Hausgeräte GmbH, 81739 München (DE)
(72) Erfinder: SING, Alexander, 89426 Wittislingen (DE); BISGIN, Sami, 89407 Dillingen (DE)
(86) Internationale Anmeldenummer: PCT/EP2021/056178
(87) Internationale Veröffentlichungsnummer: WO 2021/197794

(56) Entgegenhaltungen:
- EP-A1- 3 274 388
- DE-A1- 102008 030 539
- JP-A- 2011 167 426
- US-A1- 2011 168 217

## Beschreibung

Die vorliegende Erfindung betrifft ein Haushaltsgerät, insbesondere ein wasserführendes Haushaltsgerät.

Im Betrieb einer Haushaltsgeschirrspülmaschine gibt es eine Vielzahl an Schallquellen, welche zu einer Schallemission führen können. Dieser Schall gelangt bis zum Ohr eines Benutzers und kann von diesem negativ wahrgenommen werden. Eine Möglichkeit zur Schallreduktion besteht darin, die Schallemission an der Schallquelle zu reduzieren und somit den am Ohr des Benutzers eintreffenden Schalldruck zu reduzieren. Dies ist jedoch vor allem bei Schallereignissen, welche auf stochastischen Ereignissen beruhen oder die von dem Benutzer beeinflusst werden können, nicht immer zufriedenstellend möglich. Dies kann beispielsweise bei einem Sprühstrahl im Inneren eines Spülbehälters der Haushaltsgeschirrspülmaschine der Fall sein. Eine Ablenkung des Sprühstrahls wird stark durch die unterschiedliche Einordnung von Spülgut in den Spülbehälter beeinflusst. Es lässt sich daher nicht verhindern, dass der Sprühstrahl direkt auf den Spülbehälter trifft. Es ist auch nicht festzulegen, an welcher Stelle und in welchem Winkel der Sprühstrahl auf den Spülbehälter auftrifft.

Bei einem Entwurf der akustischen Dämmung muss daher damit gerechnet werden, dass es an jeder Stelle des Spülbehälters zu einer Anregung von Körperschall kommen kann. Bei besonders leisen Haushaltsgeschirrspülmaschinen muss daher, soweit technisch und konstruktiv möglich, jede Stelle des Spülbehälters mit einem akustisch wirksamen Material belegt werden, um dieser nicht zu verhindernden Anregung wirksam entgegenzutreten. Diese direkt auf den Spülbehälter aufgebrachten Materialien dienen hauptsächlich dazu, den in dem Metall des Spülbehälters angeregten Körperschall beziehungsweise dessen Strukturschwingungen zu dämpfen. Das heißt, durch diese akustisch wirksamen Materialien wird die Schwingungsamplitude der Oberfläche, welche durch die Anregung im Inneren des Spülbehälters entsteht, reduziert. Die Energie des Körperschalls wird dabei in dem akustisch wirksamen Material in Wärme umgewandelt.

Die Druckschrift EP 3 092 935 A1 offenbart eine Anordnung zur akustischen und thermischen Isolation eines Aufnahmebereichs eines wasserführenden Haushaltsgeräts.

Die Anordnung umfasst ein erstes Isolationselement, welches dazu eingerichtet ist, einen Aufnahmebereich thermisch zu isolieren, und ein zweites Isolationselement, welches dazu eingerichtet ist, den Aufnahmebereich akustisch zu isolieren, wobei das erste Isolationselement zwischen dem Aufnahmebereich und dem zweiten Isolationselement angeordnet ist. Dabei ist das erste Isolationselement direkt an den Aufnahmebereich angeschäumt.

Die Druckschrift JP 2011-167426 A offenbart eine Geschirrspülmaschine zum Reinigen von Spülgut, umfassend einen Spülraum und in dem Spülraum angeordnete Reinigungsdüsen zum Versprühen einer Spülflotte auf das Spülgut. Der Spülraum ist integral aus einem Harz gebildet, von dem zumindest ein Teil dreischichtige Strukturen sind, welche so konfiguriert sind, dass innere Schichten durch äußere Schichten eingeschlossen werden, wobei die inneren Schichten aus einem Schaumstoffmaterial hergestellt sind und wobei die äußeren Schichten aus einem Nicht-Schaumstoffmaterialhergestellt sind. Dies führt dazu, dass den dreischichtigen Strukturen, welche so konfiguriert sind, dass die inneren Schaumstoffschichten durch die äußeren Nicht-Schaumstoffschichten eingeschlossen werden, Steifigkeit verliehen wird und dass Geräusch der Geschirrspülmaschine durch die Verwendung des Spülraums an sich leicht reduziert wird.

Die Druckschrift DE 10 2008 030 539 A1 offenbart einen Verbundwerkstoff zur Geräuschdämmung und Schallisolation, bestehend aus einzelnen flächigen Schichten aus unterschiedlichen Werkstoffen. Es werden wenigstens drei Schichten verwendet und das Material der jeweils äußeren Schichten ist so beschaffen, dass eine Durchnetzung der wenigstens einen mittleren Schicht erfolgt. Die äußeren Schichten können im Wesentlichen aus einem Bitumenwerkstoff, insbesondere aus einer Mischung aus Bitumenwerkstoff und Steinmehl, bestehen. Die wenigstens eine mittlere Schicht kann aus einem offen- oder großporigen Werkstoff, insbesondere aus Steingranulat oder Kies oder aus Glasperlen, bestehen. Weiterhin kann ein Haushaltsgerät, insbesondere eine Geschirrspül- oder Waschmaschine, vorgesehen sein, dessen Spül- beziehungsweise Laugenbehälter mittels eines derartigen Verbundwerkstoffs verkleidet ist. Dabei kann der Verbundwerkstoff auf den Spül- oder Laugenbehälter aufgeklebt oder aufgeschmolzen sein.

Vor diesem Hintergrund besteht eine Aufgabe der vorliegenden Erfindung darin, ein verbessertes Haushaltsgerät zur Verfügung zu stellen.

Demgemäß wird ein Haushaltsgerät, insbesondere ein wasserführendes Haushaltsgerät, vorgeschlagen. Das Haushaltsgerät umfasst einen Aufnahmebereich und ein an dem Aufnahmebereich angebrachtes Isolationselement, welches dazu eingerichtet ist, den Aufnahmebereich akustisch zu isolieren, wobei das Isolationselement ein aufgeschäumtes Matrixmaterial und in dem aufgeschäumten Matrixmaterial eingebettete Partikel aufweist. Die Partikel weisen intumeszente Eigenschaften auf.

Dadurch, dass das Isolationselement das aufgeschäumte Matrixmaterial und die in diesem eingebetteten Partikel aufweist, kann eine Erhöhung des Verlustfaktors im Vergleich zu einem Isolationselement ohne derartige Partikel erzielt werden. Durch das Vorsehen der Partikel kann die Masseverteilung in dem Isolationselement im Vergleich zu einem Isolationselement ohne derartige Partikel verändert werden. Hierdurch kann der Verlustfaktor des Isolationselements erhöht werden.

Unter "Intumeszenz" ist vorliegend eine Ausdehnung oder Anschwellung, also eine Volumenzunahme, eines festen Körpers ohne chemische Umwandlung bei Hitzeeinwirkung zu verstehen. Die Partikel bilden im Falle eines Brands, in dem sich das Matrixmaterial zersetzt, eine Isolierungsschicht als Hitzebremse. Dadurch ist keine weitere Maßnahme zum Brandschutz des eingesetzten Isolationselements nötig.

Das Haushaltsgerät kann eine Haushaltsgeschirrspülmaschine sein. Das Haushaltsgerät kann jedoch auch eine Haushaltswaschmaschine oder jedes andere beliebige Haushaltsgerät, wie beispielsweise ein Kühlschrank, ein Herd, ein Backofen oder dergleichen, sein. Der Aufnahmebereich ist insbesondere quaderförmig oder würfelförmig und umfasst einen Boden, eine dem Boden gegenüberliegend angeordnete Decke, zwei einander gegenüberliegend angeordnete Seitenwände, eine verschwenkbar an dem Aufnahmebereich angeschlagene Tür sowie eine der geschlossenen Tür gegenüberliegend angeordnete Rückwand. Der Aufnahmebereich kann insbesondere ein Spülbehälter zum Aufnehmen von Spülgut sein.

Das Isolationselement kann an dem Boden, an der Decke, an den Seitenwänden, an der Rückwand und/oder an der Tür vorgesehen sein. Hierzu können mehrere Isolationselemente vorgesehen sein. Das Isolationselement kann jedoch auch derart ausgebildet sein, dass dieses den Aufnahmebereich mit Ausnahme der Tür vollständig umhüllt. Alternativ kann das Isolationselement beispielsweise auch nur an den Seitenwänden, nur an der Rückwand und/oder nur an der Decke des Aufnahmebereichs angeordnet sein. Das Isolationselement ist insbesondere geeignet, Körperschall in Wärme umzuwandeln. Hierdurch werden die akustischen Isolationseigenschaften des Isolationselements erzielt. Das Isolationselement weist jedoch auch thermische Isolationseigenschaften oder thermische Dämmeigenschaften auf.

Das aufgeschäumte Matrixmaterial umfasst vorzugsweise eine Vielzahl in dem aufgeschäumten Matrixmaterial ausgebildete Zellen, Poren oder Hohlräume. Die Poren sind vorzugsweise luftgefüllt. Die Partikel sind zwischen den Poren in dem aufgeschäumten Matrixmaterial eingebettet. Das heißt, das aufgeschäumte Matrixmaterial umschließt die Partikel. Nachfolgend wird zwischen dem aufgeschäumten Matrixmaterial, welches die Poren aufweist, und dem unaufgeschäumten Matrixmaterial, welches keine Poren aufweist, unterschieden. Das aufgeschäumte Matrixmaterial kann auch als Schaum, insbesondere als Polyurethanschaum, bezeichnet werden beziehungsweise ist ein Schaum, insbesondere ein Polyurethanschaum.

Das unaufgeschäumte Matrixmaterial kann beispielsweise mit Hilfe eines Treibmittels zu dem aufgeschäumten Matrixmaterial umgewandelt werden. Das noch unvernetzte und/oder noch nicht ausgehärtete unaufgeschäumte Matrixmaterial kann beispielsweise eine Mischung aus zwei Rohkomponenten, beispielsweise aus einem Polyol und einem Isocyanat, sein. Durch eine Vermischung dieser beiden Rohkomponenten in Kombination mit einem Treibmittel kann durch eine chemische Reaktion der Rohkomponenten miteinander das aufgeschäumte Matrixmaterial hergestellt werden. Zwischen zwei benachbarten Poren weist das aufgeschäumte Matrixmaterial keine Schaumstruktur auf und kann daher in diesem Bereich auch als unaufgeschäumtes Matrixmaterial zu verstehen sein.

Gemäß ersten Ausführungsform weist das Isolationselement bei 40 °C und bei einer Frequenz von 100 bis 800 Hz einen Verlustfaktor von größer als 0,2, bevorzugt von größer als 0,35, weiter bevorzugt von größer als 0,5, auf.

Hierdurch wird eine gute Entdröhnung des Aufnahmebereichs beziehungsweise eine akustische Dämpfung von Schwingungen des Aufnahmebereichs erreicht. Unter dem "Verlustfaktor" ist vorliegend bei physikalischen Schwingungen unterschiedlicher Natur das Verhältnis des verlustbehafteten Imaginärteils zum verlustfreien Realteil einer komplexen Größe zu verstehen. Der Verlustfaktor kann mit Hilfe der Partikel auf den jeweiligen Anwendungsbereich, das heißt auf einen definierten Temperatur- und Frequenzbereich, angepasst werden.

Gemäß einer weiteren Ausführungsform weist das Isolationselement eine Wärmeleitfähigkeit zwischen 20 und 80 mW/(m*K), bevorzugt zwischen 40 und 60 mW/(m*K), weiter bevorzugt zwischen 50 und 80 mW/(m*K), auf.

Hierdurch ist gewährleistet, dass das Isolationselement gute thermische Isolationseigenschaften oder Dämmeigenschaften aufweist. Insbesondere weist das aufgeschäumte Matrixmaterial die vorgenannte Wärmeleitfähigkeit auf. Vorzugsweise weist das aufgeschäumte Matrixmaterial eine geringere Wärmeleitfähigkeit auf als die Partikel.

Gemäß einer weiteren Ausführungsform weist das Isolationselement eine Dichte von weniger als 300 kg/m³, bevorzugt von weniger als 250 kg/m³, weiter bevorzugt von weniger als 200 kg/m³ auf.

Die Dichte des Isolationselements kann jedoch beliebig gewählt werden. Insbesondere weist das aufgeschäumte Matrixmaterial die vorgenannte Dichte auf. Das unaufgeschäumte Matrixmaterial weist eine höhere Dichte auf als das aufgeschäumte Matrixmaterial.

Gemäß einer weiteren Ausführungsform weisen die Partikel eine größere Dichte als das Matrixmaterial auf.

Bevorzugt weisen die Partikel sowohl eine größere Dichte auf als das aufgeschäumte Matrixmaterial als auch eine größere Dichte als das unaufgeschäumte Matrixmaterial. Hierdurch ist gewährleistet, dass die Partikel Massepunkte in dem aufgeschäumten Matrixmaterial bilden können. Für die Partikel kommen beispielsweise Metalle, Gesteine oder sonstige anorganische Materialien infrage. Auch organische Materialien, wie etwa Kunststoffe, kommen für die Partikel infrage, wenn die Dichte der Partikel größer ist als die des Matrixmaterials.

Gemäß einer weiteren Ausführungsform weisen die Partikel eine Dichte zwischen 500 und 8.000 kg/m³, insbesondere von 2.200 kg/m³, auf.

Die Partikel können jedoch auch eine Dichte von weniger als 500 kg/m³ oder von mehr als 8.000 kg/m³ aufweisen.

Gemäß einer weiteren Ausführungsform sind die Partikel Graphitpartikel, insbesondere Blähgraphitpartikel. Blähgraphitpartikel weisen insbesondere intumeszente Eigenschaften auf.

Blähgraphit, auch expandierbarer Graphit genannt, wird aus Graphit hergestellt. Blähgraphit ist flockenförmig. Dabei besteht eine Graphitflocke aus Schichten von wabenförmig angeordneten Kohlenstoffatomen. Innerhalb der Schichten sind die Kohlenstoffatome durch kovalente Bindungen sehr fest miteinander verbunden. Zwischen den einzelnen Schichten jedoch herrschen nur schwache Bindungskräfte, so dass Moleküle zwischen die Graphitschichten eingelagert werden können. Durch die Einlagerung von Säuren wird Graphit in Blähgraphit umgewandelt. Sobald der Blähgraphit erhitzt wird, expandieren die Graphitflocken auf ein Vielfaches ihres ursprünglichen Volumens.

Gemäß einer weiteren Ausführungsform ist das Matrixmaterial ein Polyurethan.

Das aufgeschäumte Matrixmaterial ist insbesondere ein Polyurethanschaum oder kann als Polyurethanschaum bezeichnet werden. Das Matrixmaterial kann jedoch auch ein beliebiges anderes Material sein. Für den Fall, dass das Matrixmaterial ein Polyurethan ist, kann dieses beispielsweise mit Hilfe der Rohkomponenten Isocyanat und Polyol, welche beispielsweise unter Zugabe eines Treibmittels miteinander vermischt werden, hergestellt werden. Durch eine chemische Reaktion der Rohkomponenten miteinander entsteht das aufgeschäumte Matrixmaterial mit den eingebetteten Partikeln.

Gemäß einer weiteren Ausführungsform weist das Matrixmaterial viskoelastische Eigenschaften auf.

Insbesondere weist das aufgeschäumte Matrixmaterial viskoelastische Eigenschaften auf. Unter "Viskoelastizität" ist vorliegend ein teilweise elastisches, teilweise viskoses Materialverhalten zu verstehen. Viskoelastische Stoffe vereinen also die Merkmale von Festkörpern und Flüssigkeiten in sich.

Gemäß einer weiteren Ausführungsform sind die Partikel in dem Matrixmaterial gleichmäßig verteilt angeordnet.

Insbesondere sind die Partikel in dem aufgeschäumten Matrixmaterial gleichmäßig verteilt angeordnet. Beispielsweise können die Partikel der zuvor erwähnten flüssigen Mischung der Rohkomponenten zugegeben werden. Alternativ können die Partikel auch einer der Rohkomponenten vor dem Vermischen der Rohkomponenten zugegeben werden. Die Partikel können als Keimstellen für die in dem aufgeschäumten Matrixmaterial vorgesehenen Poren dienen. So kann beispielsweise eine feinzellige Porenstruktur erreicht werden.

Gemäß einer weiteren Ausführungsform ist das Isolationselement direkt an den Aufnahmebereich angeschäumt.

Hierdurch wird eine zuverlässige und dauerhafte Verbindung zwischen dem Aufnahmebereich und dem Isolationselement erreicht. Dem Matrixmaterial können chemische Zusätze beigemischt werden, welche eine zuverlässige und dauerhafte Verbindung mit dem Aufnahmebereich gewährleisten. Alternativ oder zusätzlich kann der Aufnahmebereich dort, wo das Isolationselement vorgesehen wird, aufgeraut werden. Das Isolationselement kann jedoch auch mit dem Aufnahmebereich verklebt oder an diesen angeschmolzen werden. Das Isolationselement kann auch einfach auf den Aufnahmebereich aufgelegt sein.

Gemäß einer weiteren Ausführungsform ist der E-Modul der Partikel größer als der E-Modul des Matrixmaterials.

Insbesondere ist der E-Modul der Partikel größer als der E-Modul des aufgeschäumten Matrixmaterials und größer als der E-Modul des unaufgeschäumten Matrixmaterials. Hierdurch wird gewährleistet, dass das Matrixmaterial als Feder-Dämpferelement und die Partikel lediglich als Massepunkte wirken.

Gemäß einer weiteren Ausführungsform weisen die Partikel Partikelgrößen im Bereich von 200 bis 1.500 µm, bevorzugt von kleiner als 750 µm, weiter bevorzugt von kleiner als 500 µm, auf.

Insbesondere weisen die Partikel eine Partikelgröße von 0 bis 1.000 µm auf. Im Wesentlichen ist die Partikelgröße kleiner als 500 µm. Das heißt, es sind Partikel zulässig, welche größer als 500 µm sind. Es sollen jedoch bevorzugt 60% der Partikel kleiner als 500 µm sein. Vorzugsweise sind 80% der Partikel, insbesondere 90% der Partikel, kleiner als 500 µm.

Gemäß einer weiteren Ausführungsform sind sich voneinander unterscheidende Partikel vorgesehen, welche sich in ihrer Partikelgröße, in ihrer Form, in ihrem Material und/oder in ihrer dem Matrixmaterial zugefügten Menge voneinander unterscheiden.

Hierdurch ist es möglich, mit ein und demselben Matrixmaterial eine große Bandbreite an unterschiedlich optimierten Verlustfaktormaxima abzudecken. Dies kann dazu benutzt werden, um auf einer Fertigungsanlage Komponenten für verschiedene Anwendungszwecke am fertigen Haushaltsgerät herzustellen.

Weitere mögliche Implementierungen des Haushaltsgeräts umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Haushaltsgeräts hinzufügen.

Weitere vorteilhafte Ausgestaltungen und Aspekte des Haushaltsgeräts sind Gegenstand der Unteransprüche sowie der im Folgenden beschriebenen Ausführungsbeispiele des Haushaltsgeräts. Im Weiteren wird das Haushaltsgerät anhand von bevorzugten Ausführungsformen unter Bezugnahme auf die beigelegten Figuren näher erläutert.

Es zeigen
- Fig. 1: eine schematische perspektivische Ansicht einer Ausführungsform eines Haushaltsgeräts;
- Fig. 2: eine stark vergrößerte schematische Schnittansicht einer Ausführungsform eines Aufnahmebereichs für das Haushaltsgerät gemäß Fig. 1;
- Fig. 3: eine stark schematisierte Ansicht einer Ausführungsform eines Isolationselements für den Aufnahmebereich gemäß Fig. 2;
- Fig. 4: ein Diagramm, bei welchem der Verlustfaktor des Isolationselements gemäß der Fig. 3 gegenüber der Frequenz aufgetragen ist;
- Fig. 5: ein weiteres Diagramm, bei welchem der Verlustfaktor des Isolationselements gemäß der Fig. 3 über der Frequenz aufgetragen ist; und
- Fig. 6: ein weiteres Diagramm, bei welchem der Verlustfaktor des Isolationselements gemäß der Fig. 3 über der Frequenz aufgetragen ist.

In den Figuren sind gleiche oder funktionsgleiche Elemente mit denselben Bezugszeichen versehen worden, sofern nichts anderes angegeben ist.

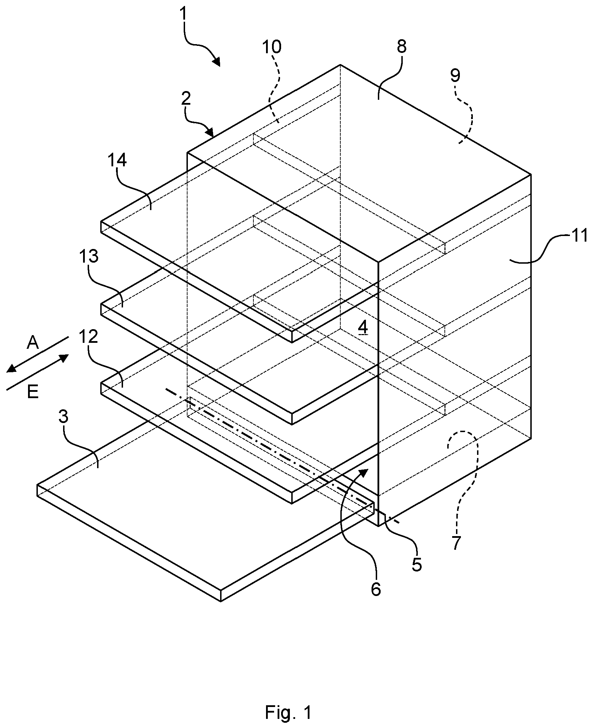

Die Fig. 1 zeigt eine schematische perspektivische Ansicht einer Ausführungsform eines Haushaltsgeräts 1. Das Haushaltsgerät 1 ist insbesondere ein wasserführendes Haushaltsgerät, wie beispielsweise eine Haushaltsgeschirrspülmaschine oder eine Haushaltswaschmaschine. Das Haushaltsgerät 1 kann jedoch auch ein Kühlschrank, ein Herd, ein Backofen oder dergleichen sein. Nachfolgend wird jedoch davon ausgegangen, dass das Haushaltsgerät 1 eine Haushaltsgeschirrspülmaschine ist.

Das Haushaltsgerät 1 weist einen Aufnahmebereich 2 auf, welcher über eine Tür 3, insbesondere wasserdicht, verschließbar ist. Hierzu kann zwischen der Tür 3 und dem Aufnahmebereich 2 eine Dichteinrichtung vorgesehen sein. Der Aufnahmebereich 2 ist vorzugsweise quaderförmig. Der Aufnahmebereich 2 kann ein Spülbehälter sein. Der Aufnahmebereich 2 kann in einem Gehäuse des Haushaltsgeräts 1 angeordnet sein. Der Aufnahmebereich 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Aufnahmebereichs 2 geschlossen oder geöffnet werden. Der Aufnahmebereich 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Der Boden 7 kann alternativ beispielsweise aus einem Kunststoffmaterial gefertigt sein.

Das Haushaltsgerät 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Aufnahmebereich 2 angeordnet. Jede Spülgutaufnahme 12 bis 14 ist wahlweise in den Aufnahmebereich 2 hinein- oder aus diesem herausverlagerbar. Insbesondere ist jede Spülgutaufnahme 12 bis 14 in einer Einschubrichtung E (Pfeil) in den Aufnahmebereich 2 hineinschiebbar oder hineinfahrbar und entgegen der Einschubrichtung E (Pfeil) in einer Auszugsrichtung A /Pfeil) aus dem Aufnahmebereich 2 herausziehbar oder herausfahrbar.

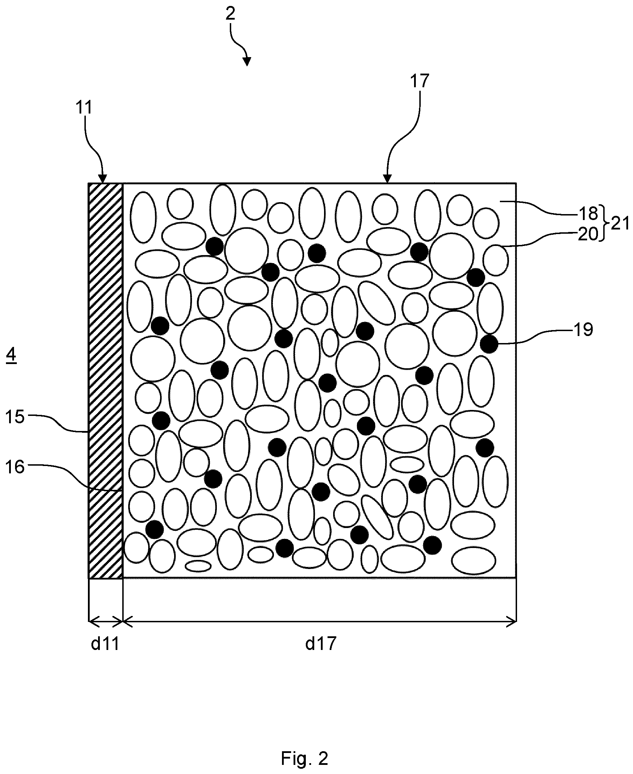

Die Fig. 2 zeigt eine stark vergrößerte schematische Schnittansicht einer Ausführungsform des Aufnahmebereichs 2. Insbesondere ist in der Fig. 2 nur ein Ausschnitt der Seitenwand 11 gezeigt. Die Seitenwand 11 kann, wie zuvor erwähnt, beispielsweise aus einem Edelstahlblech gefertigt sein. Die Seitenwand 11 umfasst eine dem Spülraum 4 zugewandte Innenseite 15 sowie eine dem Spülraum 4 abgewandte Außenseite 16. Die Innenseite 15 und die Außenseite 16 sind parallel zueinander platziert. Die Seitenwand 11 weist eine Dicke d11 auf. Die Dicke d11 kann beispielsweise 0,2 bis 1 mm betragen.

Das Haushaltsgerät 1 umfasst ein an dem Aufnahmebereich 2 angebrachtes Isolationselement 17 zum akustischen Dämmen oder Isolieren des Aufnahmebereichs 2. Das Isolationselement 17 kann auch als Dämmelement bezeichnet werden. Das Isolationselement 17 kann den Aufnahmebereich 2 einhüllen. Das heißt, das Isolationselement 17 kann an dem Boden 7, an der Decke 8, an der Rückwand 9, an den Seitenwänden 10, 11 und/oder an der Tür 3 vorgesehen sein. Alternativ kann das Isolationselement 17 beispielsweise auch nur an den Seitenwänden 10, 11 oder nur an den Seitenwänden 10, 11 und an der Rückwand 9 vorgesehen sein. Es können mehrere Isolationselemente 17 vorgesehen sein. Beispielsweise kann jeder Seitenwand 10, 11 jeweils ein derartiges Isolationselement 17 zugeordnet sein.

Das Isolationselement 17 ist dem Spülraum 4 abgewandt außenseitig an dem Aufnahmebereich 2 vorgesehen. Insbesondere ist das Isolationselement 17, wie die Fig. 2 zeigt, an der Außenseite 16 der Seitenwand 11 angebracht. Das Isolationselement 17 kann mit der Außenseite 16 beispielsweise verschmolzen oder verklebt sein. Das Isolationselement 17 kann auch nur auf die Außenseite 16 aufgelegt sein. Das Isolationselement 17 weist eine Dicke d17 von bevorzugt mehr als 2 mm, weiter bevorzugt von mehr als 10 mm, weiter bevorzugt von mehr als 15 mm, auf. Damit ist die Dicke d17 bevorzugt ein Vielfaches größer als die Dicke d11.

Das Isolationselement 17 umfasst ein aufgeschäumtes Matrixmaterial 18, in welchem Partikel 19 eingebettet sind. "Aufgeschäumt" bedeutet vorliegend, dass in dem Matrixmaterial 18 eine Vielzahl an Zellen oder Poren 20 eingeschlossen ist. Die Poren 20 können beispielsweise luftgefüllt sein. Die Poren 20 können jede beliebige Geometrie aufweisen. Beispielsweise sind die Poren 20 kugelförmig oder ellipsoidförmig. Das Matrixmaterial 18 und die Poren 20 bilden zusammen einen Polyurethanschaum 21 (PUR-Schaum). Ein Polyurethan kann durch eine Mischung aus mehreren Rohkomponenten, nämlich einem Isocyanat und einem Polyol, hergestellt werden. Ferner kann die Mischung auch ein Treibmittel enthalten. Das Isocyanat und das Polyol sind jeweils Flüssigkeiten. Ist in der Mischung des Isocyanats und des Polyols das Treibmittel vorhanden, welches bei der Reaktion des Isocyanats mit dem Polyol zu einer Ausgasung führt, wird das Matrixmaterial 18 im Zuge der chemischen Reaktion aufgeschäumt, wodurch die Poren 20 in dem Matrixmaterial 18 entstehen und sich der Polyurethanschaum 21 bildet.

Die Poren 20 sind vorzugsweise geschlossen. Das heißt, die Poren 20 sind untereinander nicht in Verbindung. Die Poren 20 können jedoch auch offen oder offenporig sein. In diesem Fall sind die Poren 20 untereinander in Verbindung. Das Matrixmaterial 18 und somit der Polyurethanschaum 21 kann mit den unterschiedlichsten Materialeigenschaften ausgestattet werden. Die Materialeigenschaften hängen im Wesentlichen von den chemischen Inhaltsstoffen der Rohkomponenten ab. Vorzugsweise weist der Polyurethanschaum 21 viskoelastische Eigenschaften auf. Als "Viskoelastizität" wird vorliegend ein teilweise elastisches und teilweise viskoses Materialverhalten bezeichnet. Viskoelastische Materialien vereinigen also die Merkmale von Festkörpern und Flüssigkeiten in sich.

Der Polyurethanschaum 21 beziehungsweise das Isolationselement 17 weist eine Wärmeleitfähigkeit zwischen 20 und 80 mW/(m*K), bevorzugt zwischen 40 und 60 mW/(m*K), weiter bevorzugt zwischen 50 und 60 mW/(m*K), auf. Der Polyurethanschaum 21 kann eine Dichte von weniger als 300 kg/m³, bevorzugt von weniger als 250 kg/m³, weiter bevorzugt von weniger als 200 kg/m³, aufweisen.

Das Isolationselement 17 ist vorzugsweise direkt an den Aufnahmebereich 2, insbesondere an die Seitenwand 11, angeschäumt. Hierzu können dem Matrixmaterial 18 chemische Zusätze beigemischt werden, welche ein Lösen des Isolationselements 17 von dem Aufnahmebereich 2 verhindern. Weiterhin kann die Außenseite 16 der Seitenwand 11 alternativ oder zusätzlich vorbehandelt, beispielsweise aufgeraut, werden, so dass sich die Verbindung zwischen dem Isolationselement 17 und der Seitenwand 11 nicht lösen kann. Alternativ kann das Isolationselement 17 auch auf den Aufnahmebereich 2 aufgeklebt, an diesen angeschmolzen oder auch nur auf diesen aufgelegt sein.

Durch das vollflächige Aufbringen des Isolationselements 17 auf den Aufnahmebereich 2 wird eine gute akustische Isolation des Aufnahmebereichs 2 sichergestellt. Ein Vorteil bei einer kompletten Umschäumung des Aufnahmebereichs 2 mit dem Isolationselement 17 ist, dass vorhandene Spalte lückenlos abgeschlossen werden, wodurch nochmals eine verbesserte akustische Isolation gewährleistet ist.

Die Partikel 19 sind gleichmäßig in dem Matrixmaterial 18 verteilt angeordnet. Ferner können die Partikel 19 als Keimstellen für die Poren 20 fungieren. Die Partikel 19 werden vorzugsweise in die zu vermischenden Rohkomponenten des Matrixmaterials 18 eingemischt. Als Partikel 19 kommen beispielsweise Metalle, Gesteine oder sonstige anorganische Materialien infrage. Auch organische Materialien, wie etwa Kunststoffe, kommen infrage, wenn die Dichte und der E-Modul der Partikel 19 größer sind als die des Matrixmaterials 18.

Besonders bevorzugt sind die Partikel 19 Graphitpartikel, insbesondere Blähgraphitpartikel. Die Verwendung von Blähgraphitpartikeln hat den Vorteil, dass die Partikel 19 in diesem Fall intumeszente Eigenschaften aufweisen. Unter "Intumeszenz" ist vorliegend eine Ausdehnung oder Anschwellung, also eine Volumenzunahme der Partikel 19 ohne eine chemische Umwandlung derselben, bei einer Hitzeeinwirkung zu verstehen. Das heißt, bei einer Hitzeeinwirkung auf das Isolationselement 17 kann sich das Matrixmaterial 18 zersetzen, während sich die als Blähgraphitpartikel ausgebildeten Partikel 19 ausdehnen oder anschwellen und somit einen als Hitzebremse fungierenden Kohlenstoffschaum auf oder an dem Aufnahmebereich 2 bilden.

Wie zuvor erwähnt, weisen die Partikel 19 eine größere Dichte als der Polyurethanschaum 21 und als das Matrixmaterial 18 auf. Die Partikel 19 können eine Dichte zwischen 500 und 8.000 kg/m³, insbesondere von 2.200 kg/m³, aufweisen. Wie zuvor erwähnt, ist auch der E-Modul der Partikel 19 größer als der E-Modul des Matrixmaterials 18. Die Partikel 19 weisen bevorzugt eine Partikelgröße von weniger als 500 µm auf. Die Partikel 19 liegen als Pulver vor und sind aufgrund ihrer Größe ausreichend klein, um sich gleichmäßig in dem Matrixmaterial 18 zu verteilen. Die Größe der Partikel 19 ist im Wesentlichen kleiner als 500 µm. Das heißt, es sind auch Partikel 19 zulässig, welche größer als 500 µm sind, jedoch ist es vorteilhaft, wenn 60% der Partikel 19 kleiner als 500 µm sind. Vorzugsweise sind 80%, insbesondere 90%, der Partikel 19 kleiner als 500 µm. Durch die Beimischung der Partikel 19 in das Matrixmaterial 18 verändert sich die Porenstruktur des Polyurethanschaums 21. Das heißt, die Größe, die Anzahl und/oder die Geometrie der Poren 20 in dem Isolationselement 17.

Zum Herstellen des Isolationselements 17 werden die Partikel 19 einer oder mehreren der flüssigen Rohkomponenten des Matrixmaterials 18 zugefügt und in der Mischung der Rohkomponenten gleichmäßig verteilt. Es ist auch möglich, die Partikel 19 den bereits vermischten Rohkomponenten hinzuzufügen, während sie noch flüssig sind. Ferner können unterschiedliche Arten von Partikeln 19 aus unterschiedlichen Stoffen kombiniert werden. Auch können diese Partikel 19 in ihrer Größenverteilung und physikalischen Eigenschaften Unterschiede aufweisen. Werden gleichartige oder auch verschiedene Partikel 19 in Größe, Art und Menge zugesetzt, kann mit ein und denselben Rohkomponenten eine große Bandbreite an unterschiedlich optimierten Isolationselementen 17 hergestellt werden. Dies kann dazu genützt werden, um auf einer Fertigungsanlage Isolationselemente 17 für verschiedene Anwendungszwecke herzustellen.

Das Isolationselement 17 weist bei 40 °C und bei einer Frequenz von 100 bis 800 Hz einen Verlustfaktor von größer als 0,2, bevorzugt von größer als 0,35, weiter bevorzugt von größer als 0,5, auf. Unter dem "Verlustfaktor" ist vorliegend bei physikalischen Schwingungen unterschiedlicher Natur das Verhältnis des verlustbehafteten Imaginärteils zum verlustfreien Realteil einer komplexen Größe zu verstehen. Durch das Hinzufügen der Partikel 19 zu dem Matrixmaterial 18 kann der Verlustfaktor des Isolationselements 17 beeinflusst werden. Vorteilhafterweise kann dieser Zusammenhang genutzt werden, wenn dadurch eine Steigerung des Verlustfaktors über den gesamten Frequenz- und Temperaturbereich stattfindet oder auch eine Steigerung in dem für den Einzelfall relevanten Frequenz- und Temperaturbereich möglich ist.

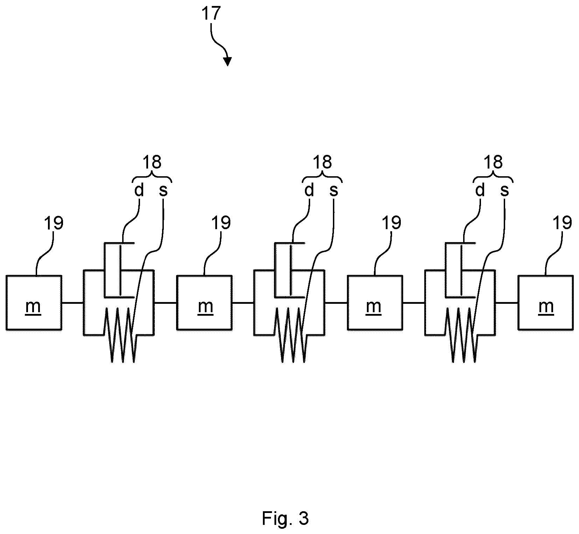

Die Fig. 3 zeigt eine stark schematisierte Ansicht des Isolationselements 17. Das Isolationselement 17 umfasst eine Vielzahl an Massepunkten oder Massen m, welche von den Partikeln 19 gebildet werden. Somit führen die Partikel 19 zu Massen m in dem Polyurethanschaum 21. Das Matrixmaterial 18 mit den Poren 20, also der Polyurethanschaum 21, bildet Federsteifigkeiten s und Dämpfungsglieder d. Das Isolationselement 17 ist somit als Feder-Masse-Schwinger dargestellt. Die Partikel 19 unterscheiden sich in ihrer Dichte stark von der Dichte des Füllgases der Poren 20 und idealerweise, jedoch nicht zwingend, von der Dichte des Matrixmaterials 18. Das heißt, die Dichte der Partikel 19 ist größer als die Dichte des Matrixmaterials 18 ohne die Partikel 19. Dies führt zu einer Veränderung der Struktur der Masseverteilung im Vergleich zu einem Schaummaterial ohne Partikel 19.

Außerdem ist es, wie zuvor erwähnt, vorteilhaft, wenn der E-Modul der Partikel 19 größer als der E-Modul des Polyurethanschaums 21 und auch größer als der E-Modul des nicht aufgeschäumten Matrixmaterials 18 ist. Hierdurch wirkt das Matrixmaterial 18 als Feder/Dämpferelement und die Partikel 19 lediglich als Massen m. Die Steifigkeit beziehungsweise die Federwirkung der Partikel 19 kann in diesem Fall vernachlässigt werden. Dies führt zu einer vorteilhafteren Nutzung der Eigenschaften der Dämpfungsglieder d in dem Isolationselement 17 und somit zu einer Steigerung des Verlustfaktors.

Werden durch die sich unterscheidenden Massen m der Partikel 19 und unterschiedliche Federsteifigkeiten s zwischen den Partikeln 19 verschiedene Resonanzfrequenzen der Feder-Masse-Schwinger erzeugt, kann ein breites Resonanzmaximum erzeugt werden. Innerhalb dieses Resonanzmaximums findet auch eine Steigerung des Verlustfaktors durch die effiziente Nutzung der Dämpfungsglieder d statt. Die viskosen Eigenschaften des Polyurethanschaums 21 und dessen Ausbildung als viskoelastischer Schaum werden vorteilhaft genutzt. So kann entweder insgesamt der Verlustfaktor erhöht werden oder auch im relevanten Frequenz- und Temperaturbereich verbessert werden.

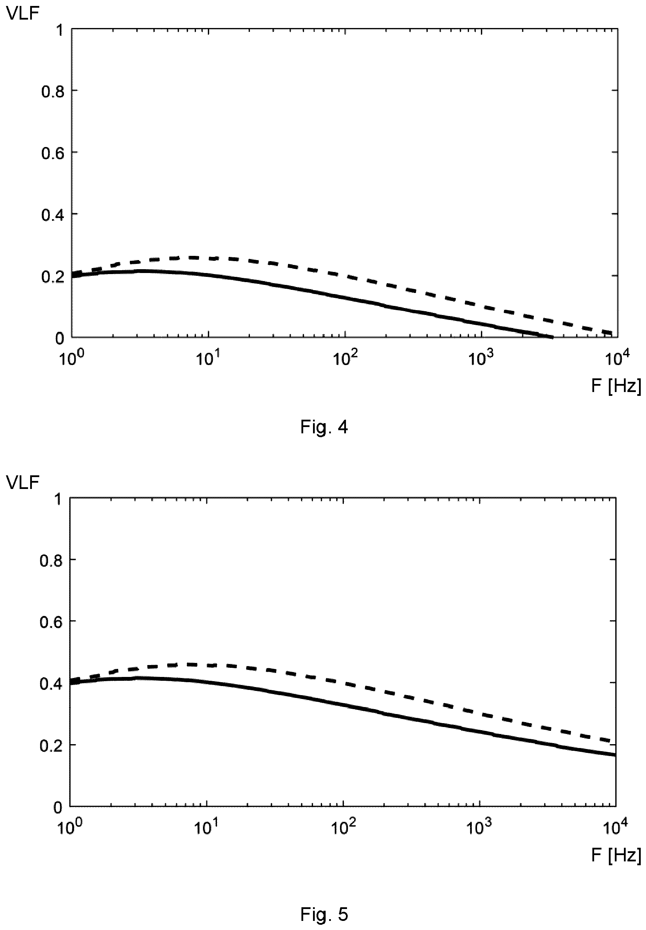

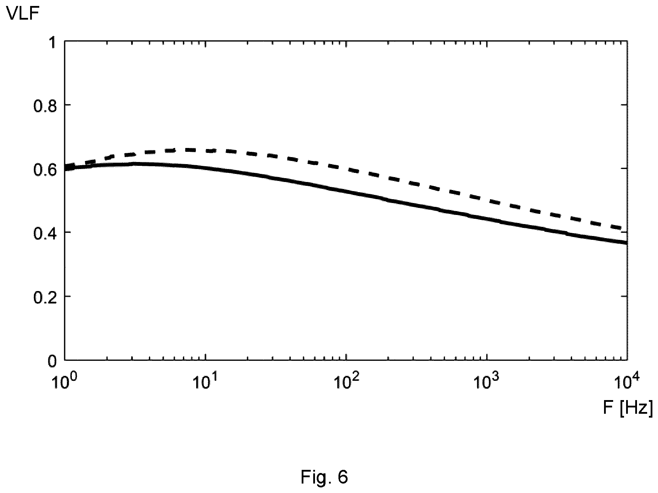

Die Fig. 4 bis 6 zeigen jeweils ein Diagramm, bei dem der Verlustfaktor VLF über der Frequenz F aufgetragen ist. Dabei stellt die durchgezogene Linie ein nicht gezeigtes Isolationselement ohne Partikel 19 dar, und die gestrichelte Linie stellt das zuvor erläuterte Isolationselement 17 mit den Partikeln 19 dar. Die Fig. 4 bis 6 unterscheiden sich durch unterschiedliche Ausgangslevel des Verlustfaktors VLF voneinander. Gemäß der Fig. 4 beträgt das Ausgangslevel des Verlustfaktors VLF 0,2. Gemäß der Fig. 5 beträgt das Ausgangslevel des Verlustfaktors VLF 0,4. Gemäß der Fig. 6 beträgt das Ausgangslevel des Verlustfaktors VLF 0,6. Das heißt, die Steigerung des Verlustfaktors VLF kann von jedem beliebigen Ausgangslevel aus starten.

Wie den Fig. 4 bis 6 eindeutig zu entnehmen ist, erhöht sich der Verlustfaktor VLF bei dem Isolationselement 17 gegenüber dem nicht gezeigten Isolationselement ohne Partikel 19 signifikant. Der Zusatz der Partikel 19 in das Matrixmaterial 18 verändert den Verlustfaktor VLF. Insbesondere wird der Verlustfaktor VLF erhöht.

Eine Steigerung des Verlustfaktors VLF um bis zu 30%, insbesondere um mindestens 20%, kann erreicht werden. Der Verlustfaktor VLF kann durch den Zusatz der Partikel 19, beispielsweise mit Hilfe unterschiedlicher Materialien, Partikelgrößen oder dergleichen auf den Anwendungsfall, das heißt auf den konkreten Frequenz- und Temperaturbereich, abgestimmt und optimiert werden. Der gesteigerte Verlustfaktor VLF führt zu einer reduzierten Abstrahlung von Schallleistung. Durch eine Kontrolle der Menge und der Art der zugesetzten Partikel 19 kann der Verlustfaktor VLF mit ein und demselben Matrixmaterial 18 in einem weiten Bereich beeinflusst werden.

Obwohl die vorliegende Erfindung anhand von Ausführungsbeispielen beschrieben wurde, ist sie vielfältig modifizierbar.

### Verwendete Bezugszeichen

- 1: Haushaltsgerät
- 2: Aufnahmebereich
- 3: Tür
- 4: Spülraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Innenseite
- 16: Außenseite
- 17: Isolationselement
- 18: Matrixmaterial
- 19: Partikel
- 20: Pore
- 21: Polyurethanschaum

- A: Auszugsrichtung (Pfeil)
- d: Dämpfungsglied
- d11: Dicke
- d17: Dicke
- E: Einschubrichtung (Pfeil)
- F: Frequenz
- m: Masse
- s: Federsteifigkeit
- VLF: Verlustfaktor

## Patentansprüche

1. Haushaltsgerät (1), insbesondere wasserführendes Haushaltsgerät, mit einem Aufnahmebereich (2) und einem an dem Aufnahmebereich (2) angebrachten Isolationselement (17), welches dazu eingerichtet ist, den Aufnahmebereich (2) akustisch zu isolieren, wobei das Isolationselement (17) ein aufgeschäumtes Matrixmaterial (18) und in dem Matrixmaterial (18) eingebettete Partikel (19) aufweist,
**dadurch gekennzeichnet,**
**dass** die Partikel (19) intumeszente Eigenschaften aufweisen.

2. Haushaltsgerät (1) nach Anspruch 1, **dadurch gekennzeichnet, dass** das Isolationselement (17) bei 40 °C und bei einer Frequenz von 100 bis 800 Hz einen Verlustfaktor (VLF) von größer als 0,2, bevorzugt von größer als 0,35, weiter bevorzugt von größer als 0,5, aufweist.

3. Haushaltsgerät (1) nach Anspruch 1 oder 2, **dadurch gekennzeichnet, dass** das Isolationselement (17) eine Wärmeleitfähigkeit zwischen 20 und 80 mW/(m*K), bevorzugt zwischen 40 und 60 mW/(m*K), weiter bevorzugt zwischen 50 und 60 mW/(m*K), aufweist.

4. Haushaltsgerät (1) nach Anspruch 1, 2 oder 3, **dadurch gekennzeichnet, dass** das Isolationselement (17) eine Dichte von weniger als 300 kg/m³, bevorzugt von weniger als 250 kg/m³, weiter bevorzugt von weniger als 200 kg/m³, aufweist.

5. Haushaltsgerät (1) nach einem der vorhergehenden Ansprüche, **dadurch gekennzeichnet, dass** die Partikel (19) eine größere Dichte als das Matrixmaterial (18) aufweisen.

6. Haushaltsgerät (1) nach einem der vorhergehenden Ansprüche, **dadurch gekennzeichnet, dass** die Partikel (19) eine Dichte zwischen 500 und 8.000 kg/m³, insbesondere von 2.200 kg/m³, aufweisen.

7. Haushaltsgerät (1) nach einem der vorhergehenden Ansprüche, **dadurch gekennzeichnet, dass** die Partikel (19) Graphitpartikel, insbesondere Blähgraphitpartikel, sind.

8. Haushaltsgerät (1) nach einem der vorhergehenden Ansprüche, **dadurch gekennzeichnet, dass** das Matrixmaterial (18) ein Polyurethan ist.

9. Haushaltsgerät (1) nach einem der vorhergehenden Ansprüche, **dadurch gekennzeichnet, dass** das Matrixmaterial (18) viskoelastische Eigenschaften aufweist.

10. Haushaltsgerät (1) nach einem der vorhergehenden Ansprüche, **dadurch gekennzeichnet, dass** die Partikel (19) in dem Matrixmaterial (18) gleichmäßig verteilt angeordnet sind.

11. Haushaltsgerät (1) nach einem der vorhergehenden Ansprüche, **dadurch gekennzeichnet, dass** das Isolationselement (17) direkt an den Aufnahmebereich (2) angeschäumt ist.

12. Haushaltsgerät (1) nach einem der vorhergehenden Ansprüche, **dadurch gekennzeichnet, dass** der E-Modul der Partikel (19) größer als der E-Modul des Matrixmaterials (18) ist.

13. Haushaltsgerät (1) nach einem der vorhergehenden Ansprüche, **dadurch gekennzeichnet, dass** die Partikel (19) Partikelgrößen im Bereich von 200 bis 1.500 µm, bevorzugt von kleiner als 750 µm, weiter bevorzugt von kleiner als 500 µm, aufweisen.

14. Haushaltsgerät nach einem der vorhergehenden Ansprüche, **dadurch gekennzeichnet, dass** sich voneinander unterscheidende Partikel (19) vorgesehen sind, welche sich in ihrer Partikelgröße, in ihrer Form, in ihrem Material und/oder in ihrer dem Matrixmaterial (18) zugefügten Menge voneinander unterscheiden.

## Claims

1. Household appliance (1), in particular a water-guiding household appliance, having a receiving region (2) and an insulating element (17) which is attached to the receiving region (2) and is set up to acoustically insulate the receiving region (2), wherein the insulating element (17) has a foamed matrix material (18) and particles (19) embedded in the matrix material (18),
**characterised in that**
the particles (19) have intumescent properties.

2. Household appliance (1) according to claim 1, **characterised in that** the insulating element (17) at 40°C and at a frequency of 100 to 800 Hz has a loss factor (VLF) of greater than 0.2, preferably of greater than 0.35, further preferably of greater than 0.5.

3. Household appliance (1) according to claim 1 or 2, **characterised in that** the insulating element (17) has a thermal conductivity of between 20 and 80 mW/(m*K), preferably of between 40 and 60 mW/(m*K), further preferably of between 50 and 60 mW/(m*K).

4. Household appliance (1) according to claim 1, 2 or 3, **characterised in that** the insulating element (17) has a density of less than 300 kg/m³, preferably of less than 250 kg/m³, further preferably of less than 200 kg/m³.

5. Household appliance (1) according to one of the preceding claims, **characterised in that** the particles (19) have a greater density than the matrix material (18).

6. Household appliance (1) according to one of the preceding claims, **characterised in that** the particles (19) have a density of between 500 and 8000 kg/m³, in particular of 2200 kg/m³.

7. Household appliance (1) according to one of the preceding claims, **characterised in that** the particles (19) are graphite particles, in particular expanded graphite particles.

8. Household appliance (1) according to one of the preceding claims, **characterised in that** the matrix material (18) is a polyurethane.

9. Household appliance (1) according to one of the preceding claims, **characterised in that** the matrix material (18) has viscoelastic properties.

10. Household appliance (1) according to one of the preceding claims, **characterised in that** the particles (19) are arranged so as to be evenly distributed in the matrix material (18).

11. Household appliance (1) according to one of the preceding claims, **characterised in that** the insulating element (17) is directly foamed onto the receiving region (2).

12. Household appliance (1) according to one of the preceding claims, **characterised in that** the modulus of elasticity of the particles (19) is greater than the modulus of elasticity of the matrix material (18).

13. Household appliance (1) according to one of the preceding claims, **characterised in that** the particles (19) have particle sizes ranging from 200 to 1500 µm, preferably smaller than 750 µm, further preferably smaller than 500 µm.

14. Household appliance (1) according to one of the preceding claims, **characterised in that** particles (19) which differ from one another are provided, said particles differing in the particle size thereof, in the shape thereof, in the material thereof and/or in the quantity thereof added to the matrix material (18).

## Revendications

1. Appareil ménager (1), en particulier appareil ménager à circulation d'eau, avec une zone d'accueil (2) et un élément d'isolation (17) fixé à la zone d'accueil (2), lequel est aménagé pour isoler acoustiquement la zone d'accueil (2), dans lequel l'élément d'isolation (17) présente un matériau matriciel moussé (18) et des particules (19) logées dans le matériau matriciel (18), **caractérisé en ce que** les particules (19) présentent des propriétés intumescentes.

2. Appareil ménager (1) selon la revendication 1, **caractérisé en ce que** l'élément isolant (17) présente, à 40 °C et à une fréquence de 100 à 800 Hz, un facteur de perte (VLF) supérieur à 0,2, de préférence supérieur à 0,35 et de façon encore davantage préférée supérieur à 0,5.

3. Appareil ménager (1) selon la revendication 1 ou 2, **caractérisé en ce que** l'élément isolant (17) présente une conductivité thermique entre 20 et 80 mW/(m*K), de préférence entre 40 et 60 mW/(m*K) et de façon encore davantage préférée entre 50 et 60 mW/(m*K).

4. Appareil ménager (1) selon la revendication 1, 2 ou 3, **caractérisé en ce que** l'élément isolant (17) présente une densité inférieure à 300 kg/m³, de préférence inférieure à 250 kg/m³ et de façon encore davantage préférée inférieure à 200 kg/m³.

5. Appareil ménager (1) selon l'une des revendications précédentes, **caractérisé en ce que** les particules (19) présentent une densité supérieure au matériau matriciel (18).

6. Appareil ménager (1) selon l'une des revendications précédentes, **caractérisé en ce que** les particules (19) présentent une densité entre 500 et 8 000 kg/m³, en particulier de 2 200 kg/m³.

7. Appareil ménager (1) selon l'une des revendications précédentes, **caractérisé en ce que** les particules (19) sont des particules de graphite, en particulier des particules de graphite expansé.

8. Appareil ménager (1) selon l'une des revendications précédentes, **caractérisé en ce que** le matériau matriciel (18) est un polyuréthane.

9. Appareil ménager (1) selon l'une des revendications précédentes, **caractérisé en ce que** le matériau matriciel (18) présente des propriétés viscoélastiques.

10. Appareil ménager (1) selon l'une des revendications précédentes, **caractérisé en ce que** les particules (19) sont disposées en répartition homogène dans le matériau matriciel (18).

11. Appareil ménager (1) selon l'une des revendications précédentes, **caractérisé en ce que** l'élément d'isolation (17) est moussé directement sur la zone d'accueil (2).

12. Appareil ménager (1) selon l'une des revendications précédentes, **caractérisé en ce que** le module E des particules (19) est supérieur au module E du matériau matriciel (18).

13. Appareil ménager (1) selon l'une des revendications précédentes, **caractérisé en ce que** les particules (19) présentent des tailles de particules comprises entre 200 et 1 500 µm, de préférence inférieures à 750 µm et de façon encore davantage préférée inférieures à 500 µm.

14. Appareil ménager selon l'une des revendications précédentes, **caractérisé en ce que** des particules (19) distinctes les unes des autres sont prévues, lesquelles se distinguent par leur taille de particule, leur forme, leur matériau et/ou leur quantité ajoutée au matériau matriciel (18).
